# EUROPEAN PATENT SPECIFICATION

(11) **EP 4 391 873 B1**
(45) Date of publication and mention of the grant of the patent: **01.04.2026**
(21) Application number: 22793226.6
(22) Date of filing: 27.09.2022
(51) Int. Cl.: A47J 31/36

(54) **APPARATUS FOR MAKING A BEVERAGE BY INFUSION OF A FOOD SUBSTANCE**
VORRICHTUNG ZUR HERSTELLUNG EINES GETRÄNKS DURCH AUFGIESSEN EINER LEBENSMITTELSUBSTANZ
APPAREIL POUR FABRICATION DE BOISSON PAR INFUSION D'UNE SUBSTANCE ALIMENTAIRE

(30) Priority: 28.09.2021 IT 202100024815
(43) Date of publication of application: 03.07.2024
(73) Proprietor: Caffitaly System S.P.A., 40041 Gaggio Montano (BO) (IT)
(72) Inventor: PAOLETTI, Luciano, 50100 Firenze (IT); DIAMANTI, Maurizio, 40030 Castel di Casio (BO) (IT); CASTELLI, Cristiano, 40046 Alto Reno Terme (BO) (IT); TONELLI, Stefano, 40041 Gaggio Montano (BO) (IT)
(74) Representative: Ponchiroli, Simone
(86) International application number: PCT/IB2022/059181
(87) International publication number: WO 2023/052993

(56) References cited:
- EP-A1- 2 764 801
- EP-A1- 3 861 897
- WO-A1-2010/097313
- WO-A1-2014/183783
- WO-A1-2015/071399
- US-A1- 2016 174 753

## Description

This invention relates in general to the beverage making sector and relates in particular to an apparatus for making a beverage by infusion of a food substance, for example roasted and ground coffee or a soluble substance.

In general, the apparatuses for which this invention is intended comprise an infusion unit which defines an infusion chamber which, in use, receives the food substance. In particular, the food substance is contained in a capsule. The infusion unit, in turn, comprises a first member and a second member, the first member being movable relative to the second member between a home position, in which the first member and the second member are spaced apart from each other and the infusion chamber is open, and an operating position, in which the first member and the second member are coupled to each other and the infusion chamber is closed and ready to proceed with infusion of the food substance contained in the infusion chamber itself.

For this purpose, the apparatus comprises beverage making parts which inject a liquid substance - in particular pressurised hot water - into the closed infusion chamber, thereby causing the beverage to be made.

The movement of the first member relative to the second member, that is to say, opening and closing of the infusion chamber, in some prior art apparatuses is manually driven by a user by means of a lever or handle which can be operated by the user, whilst in other prior art apparatuses it is motor-driven. Examples of manually-driven apparatuses can be found in WO 2015/071399 A1, WO 2014/183783 A1, EP 2 764 801 A1, US 2016/174753 A1, and EP 3 861 897 A1. A motor-drive apparatus is disclosed for example in WO 2010/097313 A1.

During closing of the infusion chamber, when the first member is near the operating position (that is to say, near the second member), the force applied must be high enough to compress a sealing gasket which is mounted on the first member or on the second member and which guarantees the seal of the infusion chamber during infusion, so as to avoid leaks of liquid substance injected into the infusion chamber or leaks of beverage. Therefore, during closing of the infusion chamber, the force to be applied is variable during the movement path of the first member and peaks near the operating position.

The constraining reaction of that force is discharged onto the supporting structure.

Moreover, while making the beverage the infusion chamber is pressurised by the liquid substance and therefore the first member is subjected to a force in the opening direction which is also discharged onto the supporting structure.

The inventors of this invention observed that, due to these forces stressing the supporting structure which are repeated over time, the supporting structure may suffer permanent deformations which compromise operation of the apparatus. In particular, the movement relative to each other and the distances between the various internal components of the apparatus are altered and the force applied on the sealing gasket may no longer be enough to achieve an adequate seal.

This disadvantage is particularly felt for apparatuses in which the moving mechanism for the first member of the infusion unit is an articulated mechanism of the toggle type, in which a crank pivots at the supporting structure and a connecting rod is hinged to the crank and to the first member. In fact, this moving mechanism applies a maximum force at its maximum extension and consequently a small movement of the entire mechanism away from the second member of the infusion unit may noticeably compromise the ability to apply the force required on the sealing gasket.

WO 2015/071399 A1, WO 2014/183783 A1, EP 2 764 801 A1, US 2016/174753 A1, and EP 3 861 897 A1 disclose apparatuses including a toggle-type mechanism. Conversely, the apparatus disclosed in WO 2010/097313 A1 does not include a toggle-type mechanism: it has a movable brewing chamber that is moved via a slider.

The disadvantage is even worse if the supporting structure is made of a low cost material with poor mechanical performance such as plastic materials which are usually used for the prior-art apparatuses.

In this context the technical purpose which forms the basis of this invention is to make an apparatus for making a beverage which allows the above-mentioned disadvantage to be overcome or which at least offers an alternative solution to the prior-art ones.

The technical purpose specified and the aims indicated are substantially achieved by an apparatus for making a beverage as defined in independent claim 1. Special embodiments of this invention are defined in the corresponding dependent claims. According to one aspect of this invention, the supporting structure of the apparatus comprises a framework having two sides opposite to each other on which two reinforcing elements are respectively mounted. The second member of the infusion unit is fixed to the two reinforcing elements and a pivoting shaft for the crank of the articulated mechanism is constrained to the two reinforcing elements. In this way, the two reinforcing elements resist a force which tends to move the shaft away from the second member when the first member and the second member are coupled to each other, that is to say, during compression of the sealing gasket and also when the infusion chamber is pressurised.

Basically, the forces discussed above are discharged onto the reinforcing elements rather than onto the entire supporting structure and consequently the use of more expensive, stronger material can be limited only to the reinforcing elements, whilst the rest of the supporting structure - which does not have to withstand those forces - can be made of plastic material with lower mechanical performance.

Specifically, the supporting elements are stiffening elements whose stiffness is greater than the stiffness of the rest of the supporting structure (that is to say, greater than the stiffness of the framework). For example, the supporting elements may be plates made of metal material. In other words, the reinforcing elements allow the supporting structure to be made stiffer and they absorb the forces which the articulated mechanism discharges onto the sides of the supporting structure.

According to one aspect of some embodiments of this invention, the second member of the infusion unit is fixed to each of the two reinforcing elements at least at two fixing points which are spaced apart from each other.

In one embodiment, the second member is fixed by means of at least one bar which extends between the two reinforcing elements by passing through the second member. That is useful since the bar allows the two reinforcing elements to be fixed to each other thereby substantially creating a further stiff frame. In another embodiment, the second member is fixed by means of a pair of screws for each of the reinforcing elements. That is useful since the apparatus is easy to disassemble, for example for substituting an internal component.

According to this invention, the apparatus comprises an articulated mechanism which has a connecting rod shaped in such a way that it has a free end resting on the supporting structure when the first member is in the operating position, causing an end of stroke of the movement of the articulated mechanism. That is advantageous since it precisely defines the position of the articulated mechanism to which the operating position corresponds and may also make the apparatus more stable while making and dispensing the beverage.

In particular, when the first member is in the operating position the articulated mechanism is beyond its dead centre. That is useful since an unwanted movement of the first member, due to the increase in the pressure in the closed infusion chamber, is prevented by the free end resting on the supporting structure.

Further features and the advantages of this invention will be more apparent from the detailed description of several preferred, non-limiting embodiments of an apparatus for making a beverage, illustrated in the accompanying drawings in which:
- Figure 1 is an axonometric exploded view of a first embodiment of an apparatus for making a beverage according to this invention, in a closed position;
- Figure 2 is a side view of the apparatus of Figure 1;
- Figure 3 is a vertical cross-sectional view of the apparatus of Figure 1, sectioned according to the section line III-III in Figure 2;
- Figure 4 is a horizontal cross-sectional view of the apparatus of Figure 1, sectioned according to the section line IV-IV in Figure 2;
- Figure 5 is a horizontal cross-sectional view of the apparatus of Figure 1 sectioned according to the section line V-V in Figure 2;
- Figure 6 is a top view of the apparatus of Figure 1 in an open position, with some elements removed to better highlight other elements;
- Figure 7 is a vertical cross-sectional view of the apparatus of Figure 1 in the open position, sectioned according to the section line VII-VII in Figure 6;
- Figure 8 is a vertical cross-sectional view of the apparatus of Figure 1 in the open position, sectioned according to the section line VIII-VIII in Figure 6;
- Figure 9 is a top view of the apparatus of Figure 1 in the closed position, with some elements removed to better highlight other elements;
- Figure 10 is vertical cross-sectional view of the apparatus of Figure 1 in the closed position, sectioned according to the section line X-X in Figure 9;
- Figure 11 is a vertical cross-sectional view of the apparatus of Figure 1 in the closed position, sectioned according to the section line XI-XI in Figure 9;
- Figure 12 is a vertical cross-sectional view of the apparatus of Figure 1 in a first intermediate position, sectioned according to the section line XI-XI in Figure 9;
- Figure 13 is a vertical cross-sectional view of the apparatus of Figure 1 in a second intermediate position, sectioned according to the section line XI-XI in Figure 9;
- Figure 14 is a schematic side view of the apparatus of Figure 1 in the open position;
- Figure 15 is a schematic side view of the apparatus of Figure 1 in the closed position;
- Figure 16 is an axonometric exploded view of a second embodiment of an apparatus for making a beverage according to this invention, in a closed position;
- Figure 17 is a side view of the apparatus of Figure 16;
- Figure 18 is a vertical cross-sectional view of the apparatus of Figure 16, sectioned according to the section line XVIII-XVIII in Figure 17;
- Figure 19 is a horizontal cross-sectional view of the apparatus of Figure 16, sectioned according to the section line XIX-XIX in Figure 17;
- Figure 20 is a horizontal cross-sectional view of the apparatus of Figure 16, sectioned according to the section line XX-XX in Figure 17;
- Figure 21 is a side view of the apparatus of Figure 16, with some elements removed to better highlight other elements;
- Figure 22 is an axonometric view of a portion of the apparatus of Figure 16, with some elements removed;
- Figure 23 is a vertical cross-sectional view of the apparatus of Figure 16, sectioned according to the section line XXIII-XXIII in Figure 21, with some elements removed.

In the accompanying figures, the reference number 1 denotes in its entirety an apparatus for making a beverage according to this invention.

It should be noticed that what is shown in the figures does not correspond to a complete apparatus 1, but only to what is necessary to illustrate this invention. In fact the figures do not show an outer casing of the apparatus (which is in contrast present in the apparatuses to be made available for sale) and some other components have been removed to put a greater focus on what is of interest for this invention.

It should also be emphasised that the figures and the following description refer to apparatuses commonly indicated as being of the "horizontal unit" type, that is to say, in which the movement of a first member of an infusion unit takes place along an axis which is substantially horizontal (or if necessary slightly oblique relative to the horizontal line). However, this invention may also be applied in different apparatuses, for example in apparatuses commonly indicated as being of the "vertical unit" type, that is to say, in which the movement of the first member takes place along an axis which is substantially vertical (or if necessary slightly oblique relative to the vertical line).

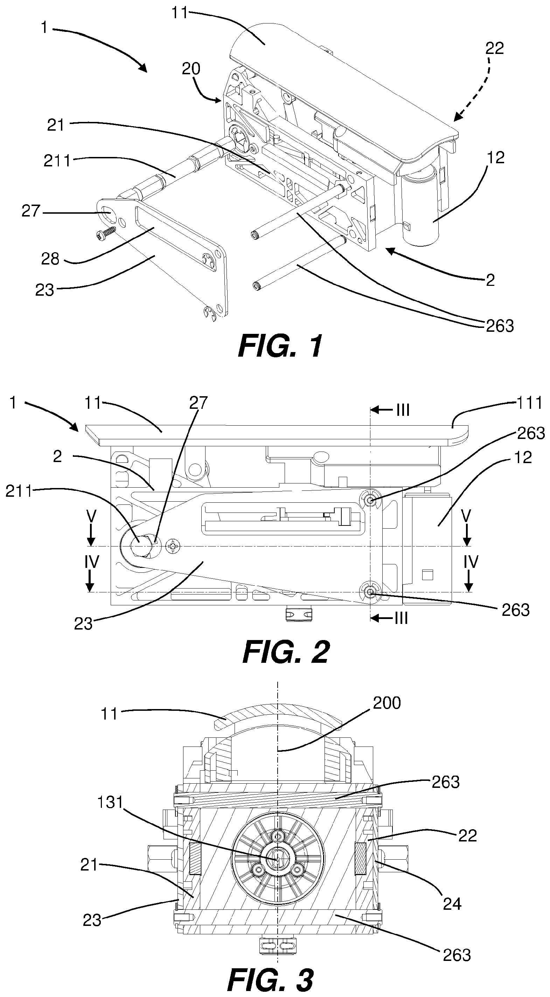

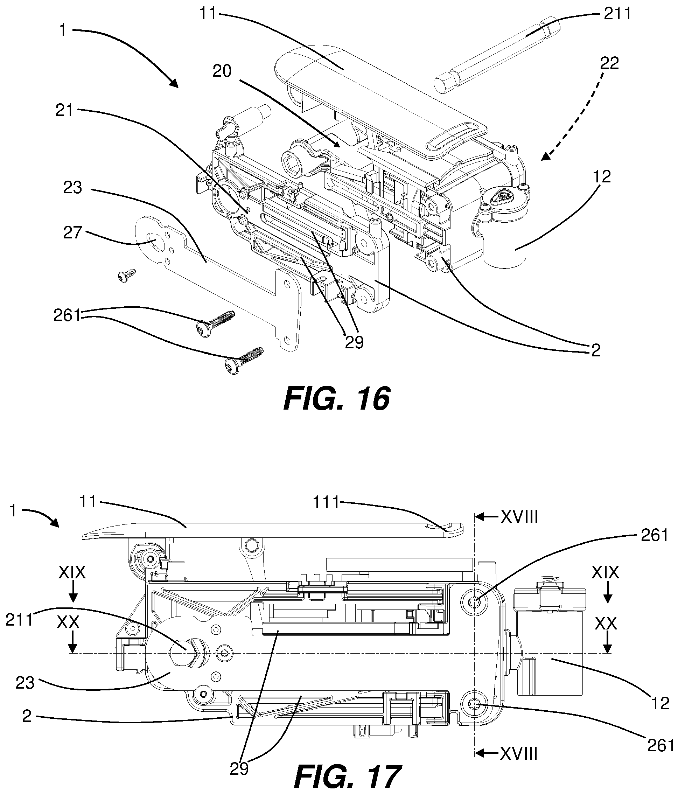

The apparatus 1 allows the beverage to be obtained by infusion of a food substance, which may be for example roasted and ground coffee or a soluble substance. In the embodiments illustrated, the apparatus 1 uses a capsule 9, in particular a disposable capsule 9, which contains the food substance inside. It should be noticed that the term "capsule" also means a pod, a cartridge or a similar object in which a casing contains the food substance. In alternative embodiments the food substance is not contained in any casing and may be inserted directly into an infusion chamber of the apparatus 1. First, the apparatus 1 comprises a supporting structure 2, configured to support the internal components of the apparatus 1. That supporting structure 2 comprises a framework 20 which has a first side 21 and a second side 22, which are opposite to each other. Basically, the first side 21 and the second side 22 are on opposite sides of a longitudinal plane 200 of the apparatus 1. In particular the first side 21 and the second side 22 extend parallel to each other. One of the two sides (which is the first side 21) is clearly visible both in Figure 1 for a first embodiment of the apparatus 1, and in Figure 16 for a second embodiment of the apparatus 1. It should be noticed that the framework 20 may be a substantially box-shaped body, formed by walls which delimit an internal space.

According to this invention, the supporting structure 2 also comprises a first reinforcing element 23 and a second reinforcing element 24 which are mounted respectively on the first side 21 and on the second side 22 of the framework 20. These elements will be described in more detail below.

The apparatus 1 comprises an outer casing (not shown) which contains and protects the internal components of the apparatus 1. The outer casing may be removably fixed to the supporting structure 2, to facilitate for example substitution of internal components, or the outer casing may be part of the supporting structure 2.

Similarly to the prior art apparatuses the apparatus 1 comprises an infusion unit 3, which is housed between the first side 21 and the second side 22 of the framework 20 and which defines an infusion chamber 30 intended to receive the food substance. In particular, the infusion chamber 30 is configured to receive the capsule 9.

In turn, the infusion unit 3 comprises a first member 31 and a second member 32. The second member 32 is fixed and stationary relative to the supporting structure 2 and is fixed to the first reinforcing element 23 and to the second reinforcing element 24. The first member 31 is movable relative to the second member 32 between a home position and an operating position.

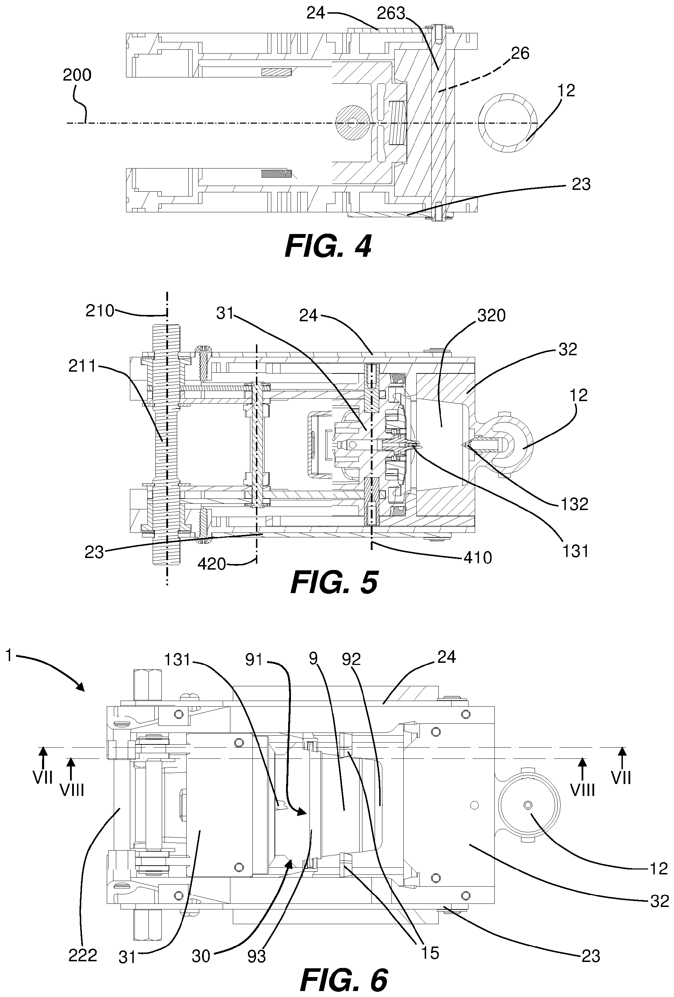

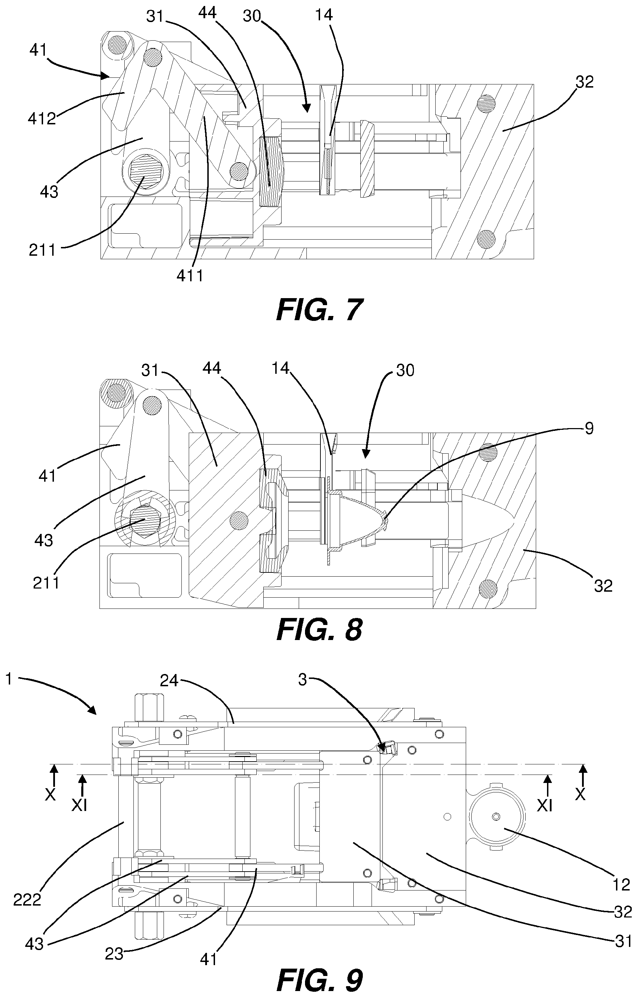

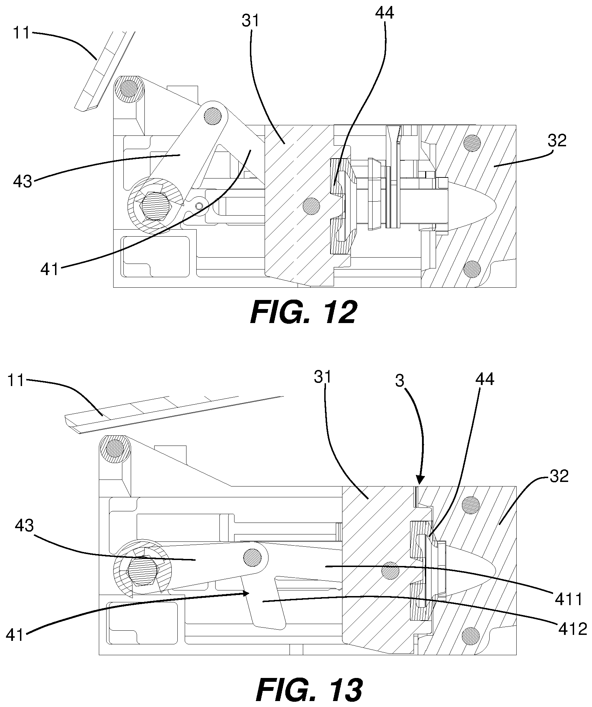

When the first member 31 is in the home position - Figures 6 to 8 - the first member 31 and the second member 32 are spaced apart from each other and the infusion chamber 30 is open and allows, in use, insertion of the food substance (in particular, of the capsule 9) into the infusion chamber 30 or removal of the food substance (in particular, of the capsule 9) from the infusion chamber 30. When the first member 31 is in the operating position, as shown in Figures 9 to 11, the first member 31 and the second member 32 are coupled to each other and the infusion chamber 30 is closed. The figures also show two intermediate positions - Figures 12 and 13 - between the home position and the operating position.

Basically, when the first member 31 is in the home position, the infusion chamber 30 is open and beverage making has not yet started (in this case the capsule 9 must be inserted / has just been inserted into the open infusion chamber 30) or has ended (in this case the already used capsule 9 must be removed from the open infusion chamber 30); when the first member 31 is in the operating position and the capsule 9 is inside the infusion chamber 30, the infusion chamber 30 is closed and the apparatus 1 can make the beverage.

The watertight seal of the infusion chamber 30 is achieved by means of a sealing gasket 44 which is compressed when the first member 31 is in the operating position. The sealing gasket 44 is mounted on at least one of the first member 31 or the second member 32. In the embodiments illustrated the sealing gasket 44 is mounted on the first member 31, which is therefore a gasket-holder body. Moreover, in the embodiments illustrated, the second member 32 has a housing 320 for housing the capsule 9 inserted in the infusion chamber 30.

The apparatus 1 also comprises beverage making parts, which are configured to feed the liquid substance (for example, hot pressurised water) through the food substance (in particular contained in the capsule 9), and a dispenser 12 to dispense the beverage made. Specifically, the beverage making parts comprise for example: a tank for containing the liquid substance; a pump for moving the liquid substance; a heater for heating the liquid substance; feeding pipes for feeding the liquid substance to the infusion chamber 30 (and to the capsule 9).

In the embodiments illustrated, the dispenser 12 is substantially a tubular body which has an inner chamber with a dispensing opening in a bottom region of the inner chamber. The infusion unit 3 comprises other components which are already known in themselves and are not described in further detail, such as: retaining elements 14 for receiving a flange 93 of the capsule 9 inserted into the open infusion chamber 30 and for retaining the capsule during closing of the infusion chamber; ejectors 15 for pushing the capsule out of the housing 320 during opening of the infusion chamber 30; a first piercer 131, associated with the first member 31 of the infusion unit 3, which is configured to pierce a top wall 91 of the capsule 9, thereby creating a first opening for injection of the liquid substance into the capsule 9 by the beverage making parts; a second piercer 132, associated with the second member 32, which is configured to pierce a bottom wall 92 of the capsule 9, creating a second opening to allow the discharge of the beverage to be dispensed, which is transferred to the dispenser 12 by means of drainage pipes. Both the first piercer 131 and the second piercer 132 are visible in Figure 5, in which the first member 31 is in the operating position (however it should be noticed that Figure 5 does not show the capsule 9 inside the infusion chamber 30).

The apparatus 1 also comprises an articulated mechanism 4 to move the first member 31 between the home position and the operating position. The articulated mechanism 4 comprises a crank 43 which pivots at the supporting structure 2 by means of a shaft 211 which defines a first axis of rotation 210, around which the crank 43 rotates. The articulated mechanism 4 also comprises a connecting rod 41 which is hinged to the first member 31 of the infusion unit 3 on a first hinge axis 410 and is hinged to the crank 43 on a second hinge axis 420. For example, the length of the crank 43 between the first axis of rotation 210 and the second hinge axis 420 is 38 mm; the length of the connecting rod 41 between the first hinge axis 410 and the second hinge axis 420 is 47.5 mm. Basically, the crank 43 and the connecting rod 41 form a toggle mechanism, which converts the rotating movement of the crank 43 into a translating movement of the first member 31: each angular position of the crank 43 around the first axis of rotation 210 corresponds to a respective position of the first member 31 in its path between the home position and the operating position. Similar toggle mechanisms are already known in themselves.

According to this invention, the second member 32 is fixed to the first reinforcing element 23 and to the second reinforcing element 24 - as already indicated above - and moreover the shaft 211 of the crank 43 is constrained to the first reinforcing element 23 and to the second reinforcing element 24.

The second member 32 and the shaft 211 are constrained to each other by the reinforcing elements 23, 24, onto which the stresses produced during closing of the infusion chamber 30, in particular when the sealing gasket 44 is compressed, are discharged. Basically, the first reinforcing element 23 and the second reinforcing element 24 resist a force which tends to move the shaft 211 away from the second member 32, when the first member 31 and the second member 32 are coupled to each other. That force is the reaction of the compressed sealing gasket 44 and may also be the thrust in the opening direction which the first member 31 receives when the infusion chamber 30 is pressurised. Thanks to the reinforcing elements 23, 24, the supporting structure 2 is less deformable and allows the design distance between the second member 32 and the shaft 211 to be preserved over time.

In particular, the first reinforcing element 23 and the second reinforcing element 24 are stiffening elements whose stiffness is greater than the stiffness of the framework 20 of the supporting structure 2. For example, the first reinforcing element 23 and the second reinforcing element 24 are made of metal material (in particular steel, aluminium or aluminium alloy), whilst the framework 20 is at least partly made of plastic material (for example ABS).

That is useful because it allows use of the highest performance and most expensive material to be limited, only using it in the regions of the supporting structure which are the most stressed, whilst the rest of the supporting structure can be made of less expensive, lighter material.

In the embodiments illustrated, the reinforcing elements 23, 24 are plates or are shaped elements made from plates.

In the first embodiment shown in Figures 1 to 15, each reinforcing element 23, 24 is a plate with a substantially polygonal shape, for example quadrilateral. The plate also has an opening 28 which receives some elements projecting from the respective side of the framework (this is a completely optional aspect).

In the embodiments illustrated, the second member 32 is fixed to the first reinforcing element 23 at least at two fixing points which are spaced apart from each other and is fixed to the second reinforcing element 24 at least at another two fixing points which are spaced apart from each other. The fixing at two points which are spaced apart is useful for preventing the second member 32 from being able to swing or rotate relative to the respective reinforcing element 23, 24.

In the embodiment in Figures 1 to 15, at least one through hole 26 is made in the second member 32, between the first side 21 and the second side 22. A bar 263 is housed in the through hole 26 and extends from the first reinforcing element 23 to the second reinforcing element 24 by passing through the second member 32. In this way the second member 32 is fixed to the first reinforcing element 23 and to the second reinforcing element 24 by the bar 263. The bar 263 is prevented from coming out of the through hole 26 for example by snap rings mounted at the ends of the bar 263.

Specifically, two through holes 26 spaced apart from each other are made in the second member 32 and the fixing is achieved by means of two bars 263, each in a respective through hole 26.

In order to constrain the shaft 211, the first reinforcing element 23 and the second reinforcing element 24 each have a seat 27 which houses a respective end portion of the shaft 211. In more detail, the seat 27 is a through opening. The seat 27 may have an oblong shape and may have larger dimensions than the cross-section of the shaft 211; in these cases the shaft 211 is constrained in the seat 27 in such a way that, at least during closing of the infusion chamber 30, the shaft 211 is in contact with the edge of the seat 27 which is furthest from the second member 32. In fact, the first reinforcing element 23 and the second reinforcing element 24 must resist a force which tends to move the shaft 211 away from the second member 32, but they are not also required to resist a force in the opposite direction.

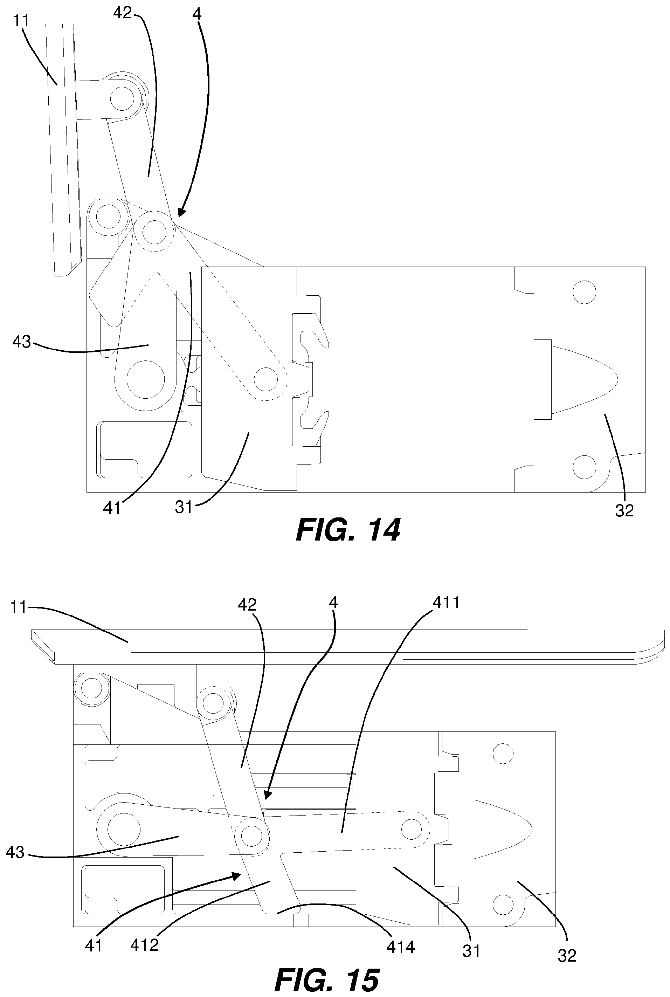

In the embodiments illustrated, the movement of the first member 31 between the home position (Figure 14) and the operating position (Figure 15), and vice versa, is manually driven by a user by means of a lever 11 (basically, a handle). It should be noticed that in other embodiments the movement of the first member 31 may be motor-driven and if necessary automated.

The lever 11 pivots at the supporting structure 2, for example by means of a connecting shaft 222 which defines a second axis of rotation 220.

In an open position the lever 11 is positioned along a substantially vertical line, whilst in a closed position the lever 11 is positioned along a substantially horizontal line. In the intermediate positions located between the open position and the closed position, such as those show in Figures 12 and 13, the lever 11 adopts angular positions which are between the vertical one and the horizontal one. The movement of the lever 11 therefore covers an angle substantially equal to 90°.

The lever 11 is positioned in the upper part of the apparatus 1 and is configured to be projecting and visible relative to the outer casing. The lever 11 has a grip zone 111 configured to be gripped by the user; the grip zone 111 is on the opposite side to the part pivoting at the supporting structure 2 and may be projecting - as shown in the embodiment in Figure 1 - or raised - as shown in the embodiment in Figure 16 - relative to the rest of the apparatus 1 in such a way as to facilitate gripping it.

The lever 11 is connected to the articulated mechanism 4 by a connecting rod 42 which is hinged both to the lever 11 on a third hinge axis 430, and to the articulated mechanism 4 on the second hinge axis 420. In particular, the first hinge axis 410, the second hinge axis 420 and the third hinge axis 430 are parallel to each other and are spaced apart from each other. By means of the connecting rod 42, the lever 11 transmits the force to the toggle mechanism at the joint between the crank 43 and the connecting rod 41. The articulated mechanism 4 transmits the movement of the lever 11 to the first member 31, so that a predetermined angular position of the lever 11 corresponds to a predetermined position of the first member 31 relative to the second member 32. Figures 12 and 13 show respectively a first intermediate position and a second intermediate position of the lever 11 (which is only partly illustrated), which correspond to two different positions of the first member 31 relative to the second member 32: a movement of the lever 11 towards the closed position causes the first member 31 to move towards the second member 32, therefore towards the operating position; a movement of the lever 11 from the closed position causes the first member 31 to move away from the second member 32, therefore towards the home position.

In order to show the shape of the articulated mechanism 4 in the best possible way, the schematic Figures 14 and 15 illustrate with dashed lines the portions of the articulated mechanism 4 which would not be visible due to being hidden. In particular, the crank 43 and the connecting rod 41 form the toggle mechanism, which converts the rotating movement of the lever 11 into a translating movement of the first member 31: each intermediate angular position (therefore each position of the lever 11 located between the open position and the closed position), corresponds to a different angular position both of the crank 43 and of the connecting rod 41.

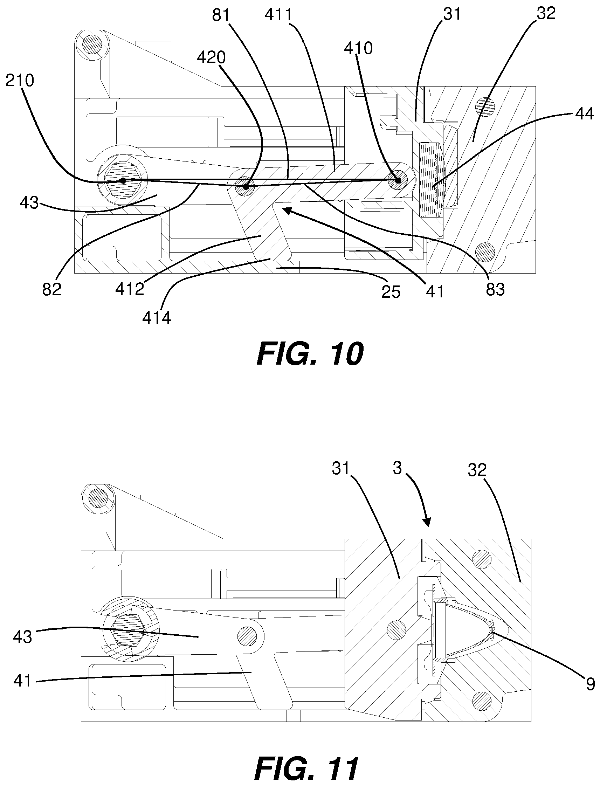

The first axis of rotation 210 and the first hinge axis 410 are in a lying plane 81, which in the embodiments shown is substantially horizontal. When the first member 31 is in the operating position (and therefore the lever 11 is in the closed position), the second hinge axis 420 is positioned below the lying plane 81. The expression "below" means that, in a side view of the apparatus 1 such as that shown in Figure 10, the second hinge axis 420 is interposed between the lying plane 81 and a base wall 25 of the supporting structure 2. The base wall 25 is configured to be rested on a surface for normal use of the apparatus 1.

When the first member 31 is in the home position (and therefore the lever 11 is in the open position), the second hinge axis 420 is positioned above the lying plane 81. Therefore, during the movement from the home position to the operating position, the second hinge axis 420 goes from above the lying plane 81 to below the lying plane 81. In practice, the toggle mechanism of the articulated mechanism 4 passes a dead centre of its movement, wherein the dead centre corresponds to the position in which the first axis of rotation 210, the first hinge axis 410 and the second hinge axis 420 lie in the same lying plane 81. The dead centre corresponds to a position in which the distance between the first axis of rotation 210 and the first hinge axis 410 is at the maximum, that is to say, at a position of maximum extension of the toggle mechanism.

Figure 10 shows the first lying plane 81 as a first segment which joins the first axis of rotation 210 and the first hinge axis 410; a second segment 82 joins the second hinge axis 420 and the first axis of rotation 210; a third segment 83 joins the second hinge axis 420 and the first hinge axis 410.

In the operating position, that is to say, when the infusion chamber is closed, the dead centre is only slightly passed by the articulated mechanism 4. The term "slightly" means that the articulated mechanism 4 is in a position very close to the dead centre: for example, the second segment 82 forms an angle of approximately 3° with the lying plane 81, the third segment 83 forms an angle of approximately 2° with the lying plane 81. The second segment 82 and the third segment 83 form an angle of approximately 175° between them (it should be noticed that at the dead centre that angle is 180°. In the example illustrated, that angle is approximately 40° in the home position).

In this description, "slightly" may mean that the angle between the second segment 82 and the third segment 83 in the operating position is between 170° and 180°, that is to say, the angles that the second segment 82 and the third segment 83 form with the lying plane 81 are small and approximately a few degrees (roughly, less than 5°).

In the embodiment illustrated, in the operating position the second hinge axis 420 is at a distance of 2 mm from the lying plane 81.

An operating position very close to the dead centre is advantageous because the compression of the sealing gasket 44 in the operating position is very close to the maximum compression which exists at the dead centre, therefore the sealing gasket 44 does not have to be oversized and the force to be applied during closing of the infusion chamber is not unnecessarily high. In fact, the maximum force is applied at the dead centre - where the gasket is the most elastically compressed - and therefore, the gasket compression in the operating position being equal, the further the operating position is from the dead centre, the greater the value of the maximum force to be applied in order to pass the dead centre towards the operating position will be.

In the apparatus 1 according to this invention, the possibility of having an operating position very close to the dead centre is also linked to the presence of the reinforcing elements 23, 24 which stiffen the supporting structure 2. In fact they allow the distance between the first axis of rotation 210 and the second member 32 to be kept unchanged; consequently, correct compression of the gasket is not compromised by gradual deformation of the sides of the apparatus, as may be the case in contrast for a supporting structure that is not very stiff.

As shown in particular in Figures 7 and 10, the connecting rod 41 comprises a first stretch 411 which extends between the first hinge axis 410 and the second hinge axis 420 and also comprises a second stretch 412 which extends between the second hinge axis 420 and a free end 414. The second stretch 412 extends along a line which forms an angle with a line of extension (corresponding to the third segment 83) of the first stretch 411 between the first hinge axis 410 and the second hinge axis 420. The free end 414 is resting on the supporting structure 2 (in particular, on an inner face of the base wall 25) when the first member 31 is in the operating position. That causes an end of stroke of the movement of the articulated mechanism 4: the articulated mechanism 4 has passed its dead centre, the infusion chamber 30 is closed, the free end 414 is resting on the supporting structure 2 and therefore the articulated mechanism 4 cannot go beyond this point. In practice, the second stretch 412 is a leg of the connecting rod 41 and the free end 414 is a resting foot of it.

By precisely defining the end of stroke of the movement of the articulated mechanism 4, that makes it possible to ensure that the first member 31 is in the correct operating position and that the infusion chamber 30 is closed with the correct degree of compression of the sealing gasket 44. Moreover the free end 414 resting on the supporting structure 2 is useful for avoiding unwanted movements of the first member 31 under the action of the pressure in the infusion chamber 30, therefore it is useful for keeping the infusion chamber 30 completely closed while making the beverage.

In the embodiments illustrated, the angle between the lines along which the first stretch 411 and the second stretch 412 of the connecting rod 41 respectively extend, is an acute angle (for example, it is an angle of 70°) and the connecting rod 41 of the articulated mechanism 4 substantially has the shape of a "7". In practice, the second stretch 412 forms an acute angle with the first stretch 411. Projecting the free end 414 onto the third segment 83, that projection is in a position interposed between the first hinge axis 410 and the second hinge axis 420. That is useful to give an even more stable end of stroke in the closed position.

The free end 414 rests on the supporting structure 2 with a face (that is to say, with a surface), not with an edge. For this purpose, that face is not parallel to the third segment 83 and in contrast is angled relative to the third segment 83 with an angle which is correlated with the angle which, in the operating position, the second segment 83 forms with the lying plane 81. That is useful for better distribution of the force which the connecting rod 41 discharges onto the supporting structure 2.

Specifically, the apparatus 1 comprises two articulated mechanisms 4, each on a respective side of the apparatus 1 and operating in parallel. The two articulated mechanisms 4 share the same shaft 211 (therefore they have the same first axis of rotation 210) and have the same first hinge axis 410 and second hinge axis 420. The connecting rod 42 pivots at the second hinge axis 420 (in particular, at a respective shaft which joins the two articulated mechanisms 4) in a position interposed between the two articulated mechanisms 4.

A solution of this type allows symmetrical distribution of the stresses to which the apparatus 1 is subjected during opening and closing of the infusion chamber 30.

In the embodiments illustrated, each articulated mechanism 4 comprises two cranks 43 hinged to a same connecting rod 41 which is positioned between the two cranks 43.

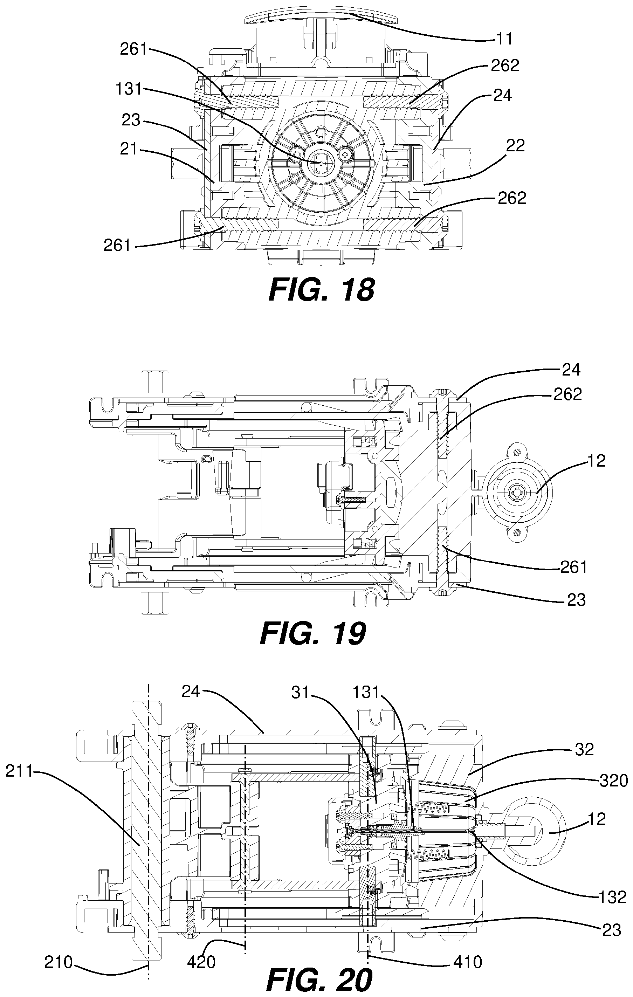

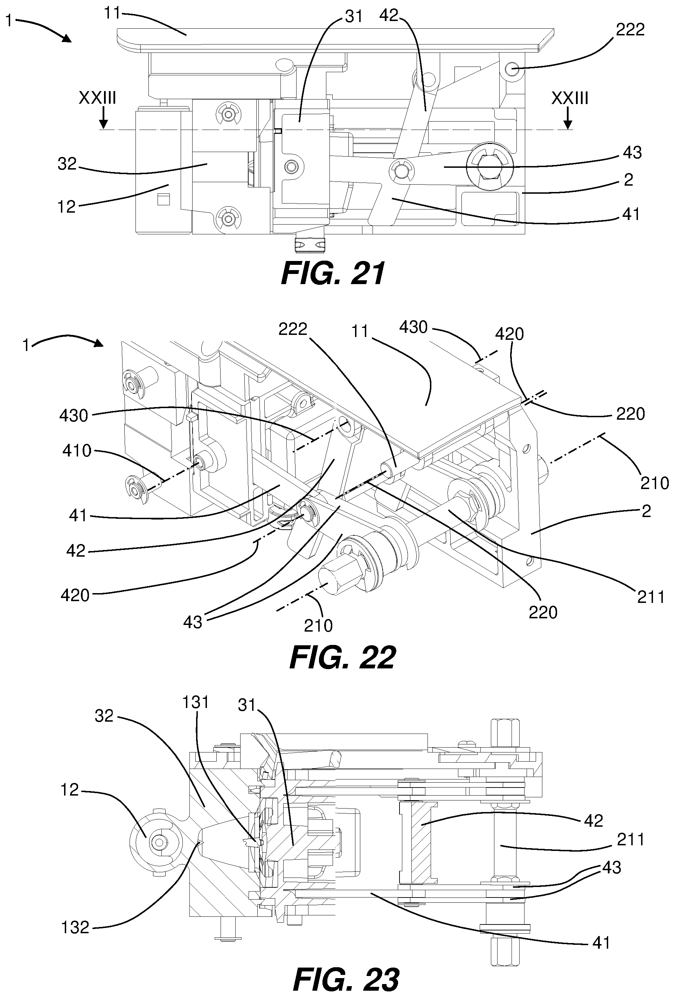

Figures 16 to 23 show a second embodiment of the apparatus 1. It differs from the embodiment of Figures 1 to 15 regarding the reinforcing elements 23, 24: in the second embodiment the reinforcing elements 23, 24 have a "T" shape, with the body of the "T" positioned substantially horizontal and with the head of the "T" positioned substantially vertical. The body of the "T" is housed between two ribs 29 which project from the respective side 21, 22 of the framework 20 of the supporting structure 2. Moreover, the second member 32 of the infusion unit 3 is fixed to the first reinforcing element 23 and to the second reinforcing element 24 by respective pairs of screws 261, 262. Therefore, unlike the first embodiment, in the second embodiment the two reinforcing elements 23, 24 are not directly fixed to each other.

It should be noticed that these two differences are independent of each other and therefore, in other embodiments, only one of them could be present.

The following is a description of the procedure for making the beverage with the apparatus 1 which uses a capsule 9, with reference in particular to the movements relative to each other of the elements of the articulated mechanism 4.

Starting from the open position of the lever 11 in which the infusion chamber 30 is open, shown in Figures 6 to 8, the user inserts a capsule 9 into the infusion chamber 30. In particular, the flange 93 of the capsule 9 is housed inside grooves made in the retaining elements 14. By acting on the lever 11 and moving it towards the closed position, the user causes the first member 31 to shift from the home position towards the operating position: the lever 11 is connected to the connecting rod 42, which in turn is hinged to the toggle mechanism; the rotation and translation of the connecting rod 42 causes the rotation of the crank 43 around the first axis of rotation 210, the rotation and translation of the connecting rod 41 and the translation of the first member 31. In particular, the translating component is caused by the fact that the connecting rod 41 is hinged to the first member 31, which is constrained to a translation, for example on a guide. Near the closed position, but before it is reached, the crank 43 and the connecting rod 41 are aligned and the toggle mechanism has reached the dead centre. A small final movement of the lever 11 causes the dead centre to be passed and the closed position to be reached, in which the free end 414 is resting on the supporting structure 2 and therefore defines the end of stroke of the movement.

The opposite movement, from the closed position to the open position, is performed by carrying out what was described above in reverse order.

The invention described above may be modified and adapted in several ways without thereby departing from the scope of the inventive concept as defined by the claims.

## Claims

1. An apparatus (1) for making a beverage by passing a liquid substance through a food substance, the apparatus (1) comprising:
- a supporting structure (2) comprising a framework (20) having a first side (21) and a second side (22) opposite to each other;
- an infusion unit (3) which is housed between the first side (21) and the second side (22) of the framework (20) and which defines an infusion chamber (30) intended to receive the food substance, the infusion unit (3) comprising a first member (31) and a second member (32), the second member (32) being fixed and stationary relative to the supporting structure (2), the first member (31) being movable relative to the second member (32) between a home position, in which the first member (31) and the second member (32) are spaced apart from each other and the infusion chamber (30) is open and allows, in use, insertion of the food substance into the infusion chamber (30) or removal of the food substance from the infusion chamber (30), and an operating position, in which the first member (31) and the second member (32) are coupled to each other and the infusion chamber (30) is closed;
- beverage making parts and a dispenser (12), which are configured to feed the liquid substance through the food substance and to dispense the beverage made;
- an articulated mechanism (4) to move the first member (31) between the home position and the operating position, the articulated mechanism (4) comprising a crank (43), which pivots at the supporting structure (2) by means of a shaft (211), and a connecting rod (41), which is hinged to the first member (31) of the infusion unit (3) on a first hinge axis (410) and is hinged to the crank (43) on a second hinge axis (420); wherein the supporting structure (2) comprises a first reinforcing element (23) and a second reinforcing element (24) which are mounted respectively on the first side (21) and on the second side (22) of the framework (20),
the second member (32) of the infusion unit (3) being fixed to the first reinforcing element (23) and to the second reinforcing element (24), the shaft (211) being constrained to the first reinforcing element (23) and to the second reinforcing element (24),
so that the first reinforcing element (23) and the second reinforcing element (24) resist a force which tends to move the shaft (211) away from the second member (32) when the first member (31) and the second member (32) are coupled to each other; **characterised in that**
the connecting rod (41) of the articulated mechanism (4) comprises a first stretch (411), which extends between the first hinge axis (410) and the second hinge axis (420), and a second stretch (412) which extends between the second hinge axis (420) and a free end (414), the second stretch (412) extending along a line which forms an angle with a line of extension of the first stretch (411) between the first hinge axis (410) and the second hinge axis (420), wherein the free end (414) is resting on the supporting structure (2) when the first member (31) is in the operating position, thereby causing an end of stroke of the movement of the articulated mechanism (4).

2. The apparatus (1) according to claim 1, wherein said angle is an acute angle, the connecting rod (41) of the articulated mechanism (4) substantially having the shape of a "7".

3. The apparatus (1) according to claim 1 or 2, wherein the first reinforcing element (23) and the second reinforcing element (24) are plates or are shaped elements made from plates.

4. The apparatus (1) according to any one of claims 1 to 3, wherein the first reinforcing element (23) and the second reinforcing element (24) are stiffening elements whose stiffness is greater than the stiffness of the framework (20).

5. The apparatus (1) according to any one of claims 1 to 4, wherein the first reinforcing element (23) and the second reinforcing element (24) are made of metal material and wherein the framework (20) is at least partly made of plastic material.

6. The apparatus (1) according to any one of claims 1 to 5, wherein the second member (32) of the infusion unit (3) is fixed to the first reinforcing element (23) at least at two fixing points which are spaced apart from each other and is fixed to the second reinforcing element (24) at least at another two fixing points which are spaced apart from each other.

7. The apparatus (1) according to any one of claims 1 to 6, wherein the second member (32) of the infusion unit (3) is fixed to the first reinforcing element (23) and to the second reinforcing element (24) by respective pairs of screws (261, 262), or wherein at least one through hole is made in the second member (32) and wherein a bar (263) is housed in the through hole and extends from the first reinforcing element (23) to the second reinforcing element (24) by passing through the second member (32), so that the second member (32) is fixed to the first reinforcing element (23) and to the second reinforcing element (24) by the bar (263).

8. The apparatus (1) according to any one of claims 1 to 7, wherein the first reinforcing element (23) and the second reinforcing element (24) each have a seat which houses a respective end portion of the shaft (211).

9. The apparatus (1) according to claim 8, wherein said seat is a through opening.

10. The apparatus (1) according to any one of claims 1 to 9, comprising a lever (11) which pivots at the supporting structure (2), is connected to the articulated mechanism (4) and can be operated by a user to move the first member (31) between the home position and the operating position.

11. The apparatus (1) according to claim 10, wherein the lever (11) is connected to the articulated mechanism (4) by a connecting rod (42) which is hinged to the lever (11) and which is hinged to the articulated mechanism (4) on the second hinge axis (420).

12. The apparatus (1) according to any one of claims 1 to 11, wherein the infusion chamber (30) is configured to receive a capsule (9) which contains the food substance, the infusion unit (3) with the first member (31) in the home position allowing insertion of the capsule (9) into the infusion chamber (30) or removal of the capsule (9) from the infusion chamber (30), the infusion unit (3) with the first member (31) in the operating position containing, in use, the capsule (9) in the infusion chamber (30) and the beverage making parts being configured to feed the liquid substance through the capsule (9).

## Patentansprüche

1. Eine Vorrichtung (1) zur Zubereitung eines Getränks durch Gießen einer flüssigen Substanz durch eine Lebensmittelsubstanz, die Vorrichtung (1) beinhaltet dabei Folgendes:
- eine Trägerstruktur (2), ein Gestell (20) beinhaltend, das dabei eine erste Seite (21) und eine zweite (22) Seite gegenüber voneinander hat;
- eine Aufgusseinheit (3), die zwischen der ersten Seite (21) und der zweiten Seite (22) des Gestells (20) untergebracht ist und die eine Aufgusskammer (30) definiert, die dazu dient, die Lebensmittelsubstanz entgegenzunehmen, die Aufgusseinheit (3) beinhaltet dabei ein erstes Glied (31) und ein zweites Glied (32), das zweite Glied (32) ist dabei befestigt und stationär im Verhältnis zur Trägerstruktur (2), das erste Glied (31) ist dabei im Verhältnis zum zweiten Glied (32) zwischen einer Grundstellung, in der das erste Glied (31) und das zweite Glied (32) in einem Abstand voneinander sind und die Aufgusskammer (30) offen ist und im Gebrauch das Einfügen der Lebensmittelsubstanz in die Aufgusskammer (30) beziehungsweise das Entfernen der Lebensmittelsubstanz aus der Aufgusskammer erlaubt, und einer Betriebsstellung, in der das erste Glied (31) und das zweite Glied (32) aneinander gekoppelt sind und die Aufgusskammer (30) geschlossen ist, beweglich;
- Getränkezubereitungsteile und einen Spender (12), die dazu ausgelegt sind, die flüssige Substanz durch die Lebensmittelsubstanz hindurch zuzuführen und das zubereitete Getränk auszugeben;
- einen Gelenkmechanismus (4), um das erste Glied (31) zwischen der Grundstellung und der Betriebsstellung (2) zu bewegen, der Gelenkmechanismus (4) beinhaltet dabei eine Kurbel (43), die sich mittels einer Welle (211) an der Trägerstruktur (2) dreht, und eine Pleuelstange (41), die an einer ersten Scharnierachse (410) klappbar am ersten Glied (31) der Aufgusseinheit (3) befestigt ist und an einer zweiten Scharnierachse (420) klappbar an der Kurbel (43) befestigt ist; wobei die Trägerstruktur (2) ein erstes Verstärkungselement (23) und ein zweites Verstärkungselement (24) beinhaltet, die jeweils an der ersten Seite (21) und an der zweiten Seite (22) des Gestells (20) montiert sind;
das zweite Glied (32) der Aufgusseinheit (3) ist dabei am ersten Verstärkungselement (23) und am zweiten Verstärkungselement (24) befestigt, die Welle (211) wird dabei auf das erste Verstärkungselement (23) und das zweite Verstärkungselement (24) beschränkt,
sodass das erste Verstärkungselement (23) und das zweite Verstärkungselement (24) einer Kraft widerstehen, die dazu neigt, die Welle (211) vom zweiten Glied (32) wegzubewegen, wenn das erste Glied (31) und das zweite Glied (32) aneinander gekoppelt sind;
**dadurch gekennzeichnet,**
**dass** die Pleuelstange (41) des Gelenkmechanismus (4) eine erste Strecke (411), die sich zwischen der ersten Scharnierachse (410) und der zweiten Scharnierachse (420) erstreckt, und eine zweite Strecke (412), die sich zwischen der zweiten Scharnierachse (420) und einem freien Ende (414) erstreckt, beinhaltet, die zweite Strecke (412) erstreckt sich dabei auf einer Linie, die mit einer Erstreckungslinie der ersten Strecke (411) zwischen der ersten Scharnierachse (410) und der zweiten Scharnierachse (420) einen Winkel bildet, wobei das freie Ende (414) auf der Trägerstruktur (2) aufliegt, wenn das erste Glied (31) in der Betriebsstellung ist, und dadurch ein Hubende für die Bewegung des Gelenkmechanismus (4) hervorruft.

2. Die Vorrichtung (1) nach dem Patentanspruch 1, wobei besagter Winkel ein spitzer Winkel ist, die Pleuelstange (41) des Gelenkmechanismus (4) hat dabei im Wesentlichen die Form einer "7".

3. Die Vorrichtung (1) nach dem Patentanspruch 1 oder 2, wobei das erste Verstärkungselement (23) und das zweite Verstärkungselement (24) Platten oder aus Platten hergestellte Formelemente sind.

4. Die Vorrichtung (1) nach jedem der Patentansprüche 1 bis 3, wobei das erste Verstärkungselement (23) und das zweite Verstärkungselement (24) Versteifungselemente sind, deren Steifigkeit größer als die Steifigkeit des Gestells (20) ist.

5. Die Vorrichtung (1) nach jedem der Patentansprüche 1 bis 4, wobei das erste Verstärkungselement (23) und das zweite Verstärkungselement (24) aus Metall bestehen und wobei das Gestell (20) zumindest teilweise aus Kunststoff besteht.

6. Die Vorrichtung (1) nach jedem der Patentansprüche 1 bis 5, wobei das zweite Glied (32) der Aufgusseinheit (3) an mindestens zwei Befestigungspunkten, die sich in einem Abstand voneinander befinden, am ersten Verstärkungselement (23) befestigt ist, und an mindestens zwei weiteren Befestigungspunkten, die sich in einem Abstand voneinander befinden, am zweiten Verstärkungselement (24) befestigt ist.

7. Die Vorrichtung (1) nach jedem der Patentansprüche 1 bis 6, wobei das zweite Glied (32) der Aufgusseinheit (3) durch jeweilige Schraubenpaare (261, 262) am ersten Verstärkungselement (23) und am zweiten Verstärkungselement (24) befestigt ist, oder wobei mindestens eine Durchgangsbohrung im zweiten Glied (32) hergestellt wurde und wobei eine Stange (263) in der Durchgangsbohrung untergebracht ist und sich vom ersten Verstärkungselement (23) zum zweiten Verstärkungselement (24) erstreckt, indem sie durch das zweite Glied (32) hindurchführt, sodass das zweite Glied (32) durch die Stange (263) am ersten Verstärkungselement (23) und am zweiten Verstärkungselement (24) befestigt ist.

8. Die Vorrichtung (1) nach jedem der Patentansprüche 1 bis 7, wobei das erste Verstärkungselement (23) und das zweite Verstärkungselement (24) beide einen Sitz haben, in dem ein jeweiliger Endabschnitt der Welle (211) untergebracht ist.

9. Die Vorrichtung (1) nach dem Patentanspruch 8, wobei besagter Sitz eine Durchgangsbohrung ist.

10. Die Vorrichtung (1) nach jedem der Patentansprüche 1 bis 9, einen Hebel (11) beinhaltend, der sich an der Trägerstruktur (2) dreht, mit dem Gelenkmechanismus (4) verbunden ist und von einem Benutzer verwendet werden kann, um das erste Glied (31) zwischen der Grundstellung und der Betriebsstellung zu bewegen.

11. Die Vorrichtung (1) nach dem Patentanspruch 10, wobei der Hebel (11) durch eine Pleuelstange (42), die klappbar am Hebel (11) befestigt ist und die an der zweiten Scharnierachse (420) klappbar am Gelenkmechanismus (4) befestigt ist, mit dem Gelenkmechanismus (4) verbunden ist.

12. Die Vorrichtung (1) nach jedem der Patentansprüche 1 bis 11, wobei die Aufgusskammer (30) dazu ausgelegt ist, eine Kapsel (9), die die Lebensmittelsubstanz enthält, entgegenzunehmen, die Aufgusseinheit (3) erlaubt dabei, wenn das erste Glied (31) in der Grundstellung ist, das Einsetzen der Kapsel (9) in die Aufgusskammer (30) beziehungsweise das Entfernen der Kapsel (9) aus der Aufgusskammer (30), die Aufgusseinheit (3) enthält dabei, wenn das erste Glied (31) in der Betriebsstellung ist, im Gebrauch die Kapsel (9) in der Aufgusskammer (30) und die Getränkezubereitungsteile sind dabei dazu ausgelegt, die Lebensmittelsubstanz durch die Kapsel (9) hindurch zuzuführen.

## Revendications

1. Un appareil (1) pour la préparation d'une boisson par passage d'une substance liquide à travers une substance alimentaire, l'appareil (1) comprenant :
- une structure de support (2) comprenant un châssis (20) ayant un premier côté (21) et un deuxième côté (22) opposés entre eux ;
- un groupe d'infusion (3) qui est logé entre le premier côté (21) et le deuxième côté (22) du châssis (20) et qui définit une chambre d'infusion (30) destinée à recevoir la substance alimentaire, le groupe d'infusion (3) comprenant un premier organe (31) et un deuxième organe (32), le deuxième organe (32) étant fixe et stationnaire par rapport à la structure de support (2), le premier organe (31) étant mobile par rapport au deuxième organe (32) entre une position de repos, dans laquelle le premier organe (31) et le deuxième organe (32) sont espacés l'un de l'autre et la chambre d'infusion (30) est ouverte et permet, lors de l'utilisation, l'introduction de la substance alimentaire dans la chambre d'infusion (30) ou le retrait de la substance alimentaire de la chambre d'infusion (30), et une position de travail, dans laquelle le premier organe (31) et le deuxième organe (32) sont accouplés l'un avec l'autre et la chambre d'infusion (30) est fermée ;
- des éléments de préparation de la boisson et un distributeur (12), qui sont configurés pour alimenter la substance liquide à travers la substance alimentaire et pour distribuer la boisson préparée ;
- un mécanisme articulé (4) pour déplacer le premier organe (31) entre la position de repos et la position de travail, le mécanisme articulé (4) comprenant une manivelle (43), qui pivote au niveau de la structure de support (2) par le biais d'un arbre (211), et une tige de liaison (41), qui est articulée au premier organe (31) du groupe d'infusion (3) sur un premier axe de charnière (410) et est articulée à la manivelle (43) sur un deuxième axe de charnière (420) ;
dans lequel la structure de support (2) comprend un premier élément de renforcement (23) et un deuxième élément de renforcement (24) qui sont montés respectivement sur le premier côté (21) et sur le deuxième côté (22) du châssis (20),
le deuxième organe (32) du groupe d'infusion (3) étant fixé au premier élément de renforcement (23) et au deuxième élément de renforcement (24), l'arbre (211) étant contraint au premier élément de renforcement (23) et au deuxième élément de renforcement (24),
de sorte que le premier élément de renforcement (23) et le deuxième élément de renforcement (24) résistent à une force qui a tendance à éloigner l'arbre (211) du deuxième organe (32) lorsque le premier organe (31) et le deuxième organe (32) sont accouplés l'un avec l'autre ;
**caractérisé en ce que**
la tige de liaison (41) du mécanisme articulé (4) comprend un premier tronçon (411), qui s'étend entre le premier axe de charnière (410) et le deuxième axe de charnière (420), et un deuxième tronçon (412) qui s'étend entre le deuxième axe de charnière (420) et une extrémité libre (414), le deuxième tronçon (412) s'étendant le long d'une direction qui forme un angle avec une direction d'extension du premier tronçon (411) entre le premier axe de charnière (410) et le deuxième axe de charnière (420), dans lequel l'extrémité libre (414) est en appui sur la structure de support (2) lorsque le premier organe (31) est dans la position de travail, déterminant ainsi un fin de course pour le mouvement du mécanisme articulé (4).

2. L'appareil (1) selon la revendication 1, dans lequel ledit angle est un angle aigu, la tige de liaison (41) du mécanisme articulé (4) ayant essentiellement la forme d'un « 7 ».

3. L'appareil (1) selon la revendication 1 ou 2, dans lequel le premier élément de renforcement (23) et le deuxième élément de renforcement (24) sont des plaques ou sont des éléments profilés réalisés à partir de plaques.

4. L'appareil (1) selon l'une quelconque des revendications de 1 à 3, dans lequel le premier élément de renforcement (23) et le deuxième élément de renforcement (24) sont des éléments de raidissement dont la rigidité est supérieure à la rigidité du châssis (20).

5. L'appareil (1) selon l'une quelconque des revendications de 1 à 4, dans lequel le premier élément de renforcement (23) et le deuxième élément de renforcement (24) sont réalisés dans un matériau métallique et dans lequel le châssis (20) est au moins partiellement réalisé en matière plastique.

6. L'appareil (1) selon l'une quelconque des revendications de 1 à 5, dans lequel le deuxième organe (32) du groupe d'infusion (3) est fixé au premier élément de renforcement (23) au moins en deux points de fixation qui sont espacés l'un de l'autre et est fixé au deuxième élément de renforcement (24) au moins en deux autres points de fixation qui sont espacés l'un de l'autre.

7. L'appareil (1) selon l'une quelconque des revendications de 1 à 6, dans lequel le deuxième organe (32) du groupe d'infusion (3) est fixé au premier élément de renforcement (23) et au deuxième élément de renforcement (24) par des paires de vis (261, 262) respectives, ou dans lequel au moins un trou traversant est réalisé dans le deuxième organe (32) et dans lequel une barre (263) est logée dans le trou traversant et s'étend du premier élément de renforcement (23) au deuxième élément de renforcement (24) en passant à travers le deuxième organe (32), de sorte que le deuxième organe (32) est fixé au premier élément de renforcement (23) et au deuxième élément de renforcement (24) par la barre (263).

8. L'appareil (1) selon l'une quelconque des revendications de 1 à 7, dans lequel le premier élément de renforcement (23) et le deuxième élément de renforcement (24) ont chacun un siège qui loge une portion d'extrémité respective de l'arbre (211).

9. L'appareil (1) selon la revendication 8, dans lequel ledit siège est une ouverture traversante.

10. L'appareil (1) selon l'une quelconque des revendications de 1 à 9, comprenant un levier (11) qui pivote au niveau de la structure de support (2), est relié au mécanisme articulé (4) et peut être actionné par un utilisateur pour déplacer le premier organe (31) entre la position de repos et la position de travail.

11. L'appareil (1) selon la revendication 10, dans lequel le levier (11) est relié au mécanisme articulé (4) par une tige de liaison (42) qui est articulée au levier (11) et qui est articulée au mécanisme articulé (4) sur le deuxième axe de charnière (420).

12. L'appareil (1) selon l'une quelconque des revendications de 1 à 11, dans lequel la chambre d'infusion (30) est configurée pour recevoir une capsule (9) qui contient la substance alimentaire, le groupe d'infusion (3) avec le premier organe (31) dans la position de repos permettant l'introduction de la capsule (9) dans la chambre d'infusion (30) ou le retrait de la capsule (9) de la chambre d'infusion (30), le groupe d'infusion (3) avec le premier organe (31) dans la position de travail contenant, lors de l'utilisation, la capsule (9) dans la chambre d'infusion (30) et les éléments de préparation de la boisson étant configurés pour alimenter la substance liquide à travers la capsule (9).
